# EUROPÄISCHE PATENTSCHRIFT

(11) **EP 1 562 769 B1**
(45) Veröffentlichungstag und Bekanntmachung des Hinweises auf die Patenterteilung: **19.01.2011**
(21) Anmeldenummer: 03788775.9
(22) Anmeldetag: 06.11.2003
(51) Int. Cl.: B60J 7/20

(54) **CABRIOLET-FAHRZEUG MIT VERSENKBAREM VERDECK**
CABRIOLET VEHICLE COMPRISING A RETRACTABLE SOFT-TOP
VEHICULE DE TYPE CABRIOLET POURVU D'UNE CAPOTE ESCAMOTABLE

(30) Priorität: 14.11.2002 DE 10252987
(43) Veröffentlichungstag der Anmeldung: 17.08.2005
(73) Patentinhaber: Wilhelm Karmann GmbH, 49084 Osnabrück (DE)
(72) Erfinder: HABACKER, Norbert, 49565 Bramsche (DE)
(74) Vertreter: Kronthaler, Schmidt & Coll.
(86) Internationale Anmeldenummer: PCT/DE2003/003679
(87) Internationale Veröffentlichungsnummer: WO 2004/043723

(56) Entgegenhaltungen:
- DE-A- 4 106 732
- DE-A- 10 039 683
- DE-C1- 19 635 869
- PATENT ABSTRACTS OF JAPAN Bd. 018, Nr. 543 (M-1687), 17. Oktober 1994 (1994-10-17) -& JP 06 191285 A (NISSAN MOTOR CO LTD; others: 01), 12. Juli 1994 (1994-07-12)

## Beschreibung

Die Erfindung betrifft ein Cabriolet-Fahrzeug mit einem versenkbaren Verdeck gemäß dem Oberbegriff des Anspruchs 1.

Bei Cabriolet-Fahrzeugen mit einem versenkbaren Verdeck, insbesondere einem Faltverdeck, wird dieses vor dem Fahren in Offenstellung in einen heckseitigen Verdeckkasten eingelegt. In dieser Stellung ist das Verdeck mittels eines am Verdeckkastendeckel befindlichen und als Kunststoff-Formteil ausgebildeten Niederhalters (DE 198 13 347 A1) belastet, um bei der Fahrbewegung Schwingungen und ungewollte Belastungen von der empfindlichen Dachhaut fernzuhalten. Die DE 196 35 869 C1 zeigt ein weiteres Beispiel eines Niederhalters. Das KunststoffFormteil ist dabei mittels eines Befestigungsteiles an der Unterseite des Verdeckkastendeckels gehalten, so daß das ortsfeste Formteil nur durch eine punktgenaue, einfache Schwenkbewegung in Auflagestellung überführbar ist und eine auch Schubkomponenten enthaltende Bewegung des Verdeckkastendeckels im Bereich der am Niederhalter aneinanderliegenden Flächen nachteilige Reibbelastungen verursachen würde.

Die Erfindung befaßt sich mit dem Problem, ein verbessertes Faltverdeck für ein Cabriolet-Fahrzeug zu schaffen, dessen Niederhalter mit geringem technischem Aufwand an eine Schwenk-Schub-Bewegung des Verdeckkastendeckels anpaßbar ist und bei schonendem Verbindungsaufbau eine optimale Halterung des zurückgeklappten Verdecks ermöglicht.

Ausgehend von einem Cabriolet-Fahrzeug gemäß dem Oberbegriff des Anspruchs 1 löst die Erfindung diese Aufgabe mit den Merkmalen des kennzeichnenden Teils des Anspruchs 1. Hinsichtlich wesentlicher weiterer Ausgestaltungen wird auf die Ansprüche 2 bis 11 verwiesen.

Das Cabriolet-Fahrzeug ist in erfindungsgemäßer Ausführung mit einem zweiteiligen Niederhalter versehen, dessen am Verdeckkastendeckel beweglich abgestütztes Gegenglied mit dem Auflageteil in der zurückgeklappten Verdeckstellung verbunden werden kann. Das Gegenglied ist schwenk- und/oder schubbeweglich am Verdeckkastendeckel so gelagert, daß in einer Verbindungsstellung mit dem Auflageteil eine von der Schließ- bzw. Öffnungskinematik zusätzlich zur Schwenkbewegung erzeugte Schubbewegungskomponente ohne Belastung des Verdecks umlenkbar ist und damit der zweiteilige Niederhalter mit geringem Aufwand an die Antriebskinematik eines jeweiligen Verdeckkastendeckels anpaßbar ist.

In einer beim Schließen des Verdeckkastendeckels erreichten Schwenkphase gelangt das bereits durch die Öffnungsstellung des Faltverdecks positionierte Anlageteil in einen Verbindungseingriff mit dem Gegenglied, derart, daß dieses bei Weiterbewegung des Verdeckkastendeckels mit dem Anlageteil geführt wird und relativ zum Verdeckkastendeckel geschwenkt werden kann. Durch diese phasenweise gemeinsam erfolgende Bewegung des Verdeckkastendeckels sowie des als Schwenkstütze ausgebildeten Gegengliedes wird mit geringem Aufwand eine funktionale Verbindung der bei der Verdecksteuerung beweglichen Bauteile erreicht. Damit ist der erfindungsgemäße Niederhalter bei unterschiedlichen automatischen Antriebskonzepten anwendbar.

Der zweiteilige Niederhalter ist durch entsprechende Einstellmöglichkeiten im Bereich des Gegengliedes so konzipiert, daß für unterschiedliche Dachkonfigurationen eine optimale Niederhaltefunktion bei geringsten Belastungen der Bauteile erreichbar ist. Das als Schwenkstütze ausgebildete Gegenglied kann zum Auflageteil hin so positioniert werden, daß mit geringen Druckkräften die Belastung einer empfindlichen Dachhaut des abgelegten Verdecks verringert ist und an diesem durch Fahrbelastungen in das Fahrzeug eingetragene Schwingungen durch den Niederhalter gedämpft werden. ,

Weitere Einzelheiten und Vorteile der Erfindung ergeben sich aus der nachfolgenden Beschreibung und der Zeichnung, die ein Ausführungsbeispiel des erfindungsgemäßen Verdecks anhand eines Faltverdeckes näher veranschaulicht. In der Zeichnung zeigen:
- Fig. 1: eine perspektivische Heckansicht eines Cabriolet-Fahrzeugs mit dessen Faltverdeck in Schließstellung,
- Fig. 2: eine schematische Querschnittsdarstellung des Heckbereichs des Fahr- zeugs gemäß einer Linie II-II in Fig. 1,
- Fig. 3: eine Ausschnittsdarstellung ähnlich Fig. 2 mit dem Verdeckkastendeckel in Öffnungsstellung bei Einleitung eines Schließ- bzw. Öffnungsvor- ganges,
- Fig. 4: eine Prinzipdarstellung ähnlich Fig. 2 mit im Verdeckkasten befindlichem Faltverdeck und sich schließendem Verdeckkastendeckel, und
- Fig. 5: eine Prinzipdarstellung ähnlich Fig. 4 bei geschlossenem Verdeckkasten- deckel.

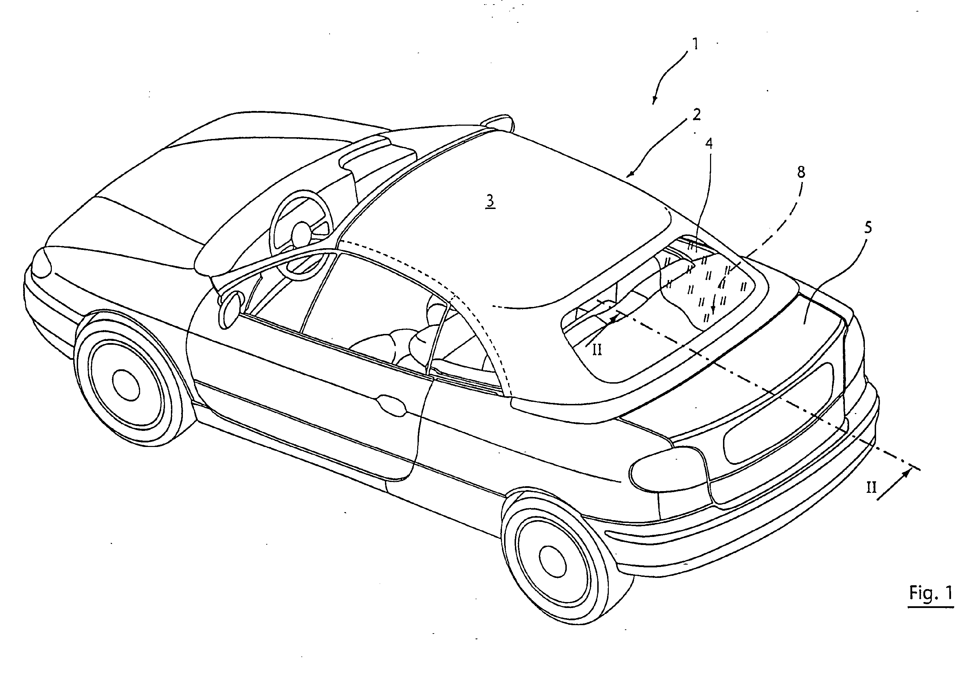

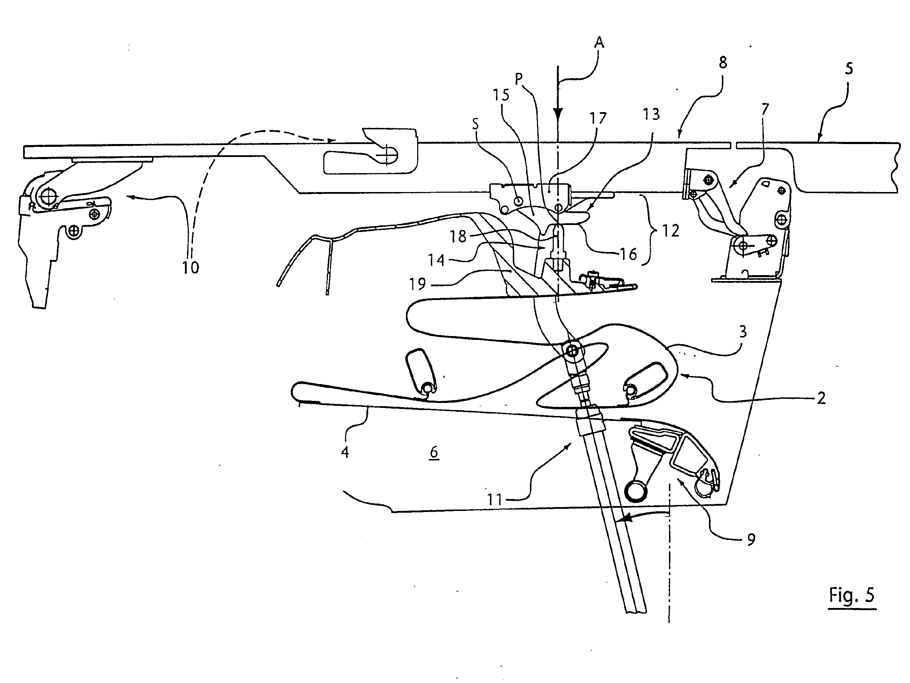

In Fig. 1 ist ein insgesamt mit 1 bezeichnetes Cabriolet-Fahrzeug in einer Perspektivdarstellung veranschaulicht, wobei dessen in Schließstellung befindliches Faltverdeck 2 im Bereich der sich über den Fahrgastraum erstreckenden Dachhaut 3 heckseitig eine Heckscheibe 4 aufweist. Der heckseitige Bereich der Dachhaut 3 ist unterhalb der Heckscheibe 4 auf einem mit einem Kofferraumdeckel 5 im wesentlichen in einer Ebene befindlichen Verdeckkastendeckel 8 (Fig. 5) abgelegt. Mit diesem im wesentlichen U-förmig in der heckseitigen Karosseriekontur verlaufenden Verdeckkastendeckel 8 ist ein zur Aufnahme des Verdecks 2 vorgesehener Verdeckkasten 6 verschließbar.

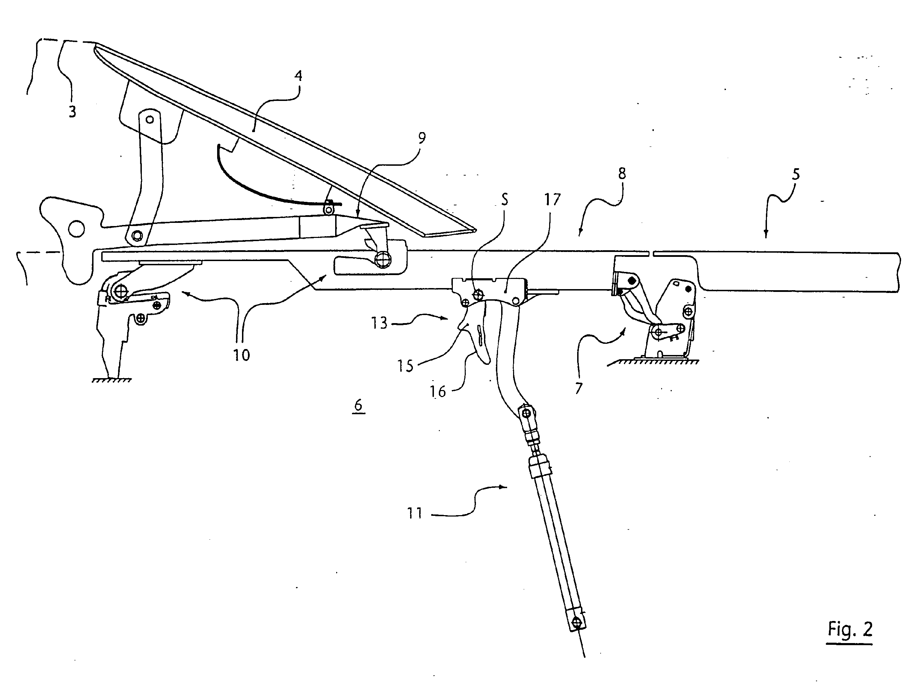

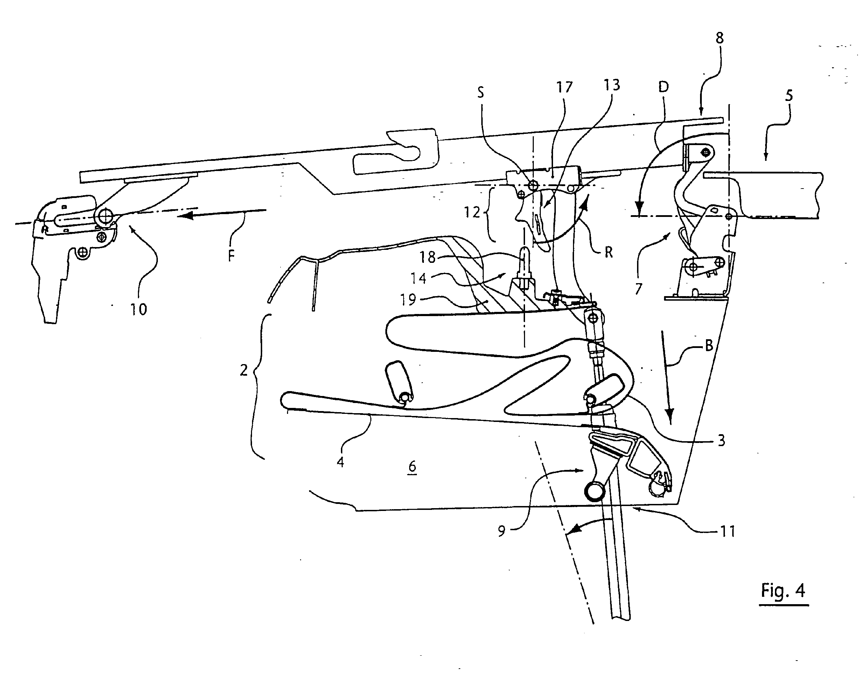

Der Verdeckkastendeckel 8 ist mittels jeweiliger zur Fahrzeuglängsmittelebene M spiegelbildlich gegenüberliegender Scharniervorrichtungen 7 (bzw. 7', in den Seitenansichten gemäß Fig. 2 bis 5 nicht dargestellt) an der Fahrzeugkarosserie schwenkbar abgestützt. In Fahrtrichtung nach vorn wirkt der Verdeckkastendeckel 8 mit zumindest einer im Bereich eines randseitigen Verdeckspannbügels 9 vorgesehenen Schließvorrichtung 10 zusammen. Bei der Bewegung des Verdeckkastendeckels 8 wirkt eine allgemein mit 11 bezeichnete Antriebsvorrichtung in Form eines hydraulischen Hubantriebes, so daß dessen beispielhaft in Fig. 4 dargestellte Absenkbewegung (Pfeil B) eine Schwenkbewegung (Pfeil D) im Bereich der Scharniervorrichtung 7 bewirkt und von dieser ausgehend dem Verdeckkastendeckel 8 im Bereich der Schließvorrichtung 10 eine im wesentlichen horizontale Schubbewegung (Pfeil F) vermittelt wird.

Zur Festlegung des im Verdeckkasten 6 befindlichen Faltverdecks 2 in seiner Öffnungsstellung ist ein beim Schließen des Verdeckkastendeckels 8 wirksamer Niederhalter 12 (Fig. 5) vorgesehen, mit dem insbesondere die gefaltete Dachhaut 3 mit der Heckscheibe 4 in einer auch bei hohen Fahrbelastungen gesicherten Lage im Verdeckkasten 6 gehalten ist.

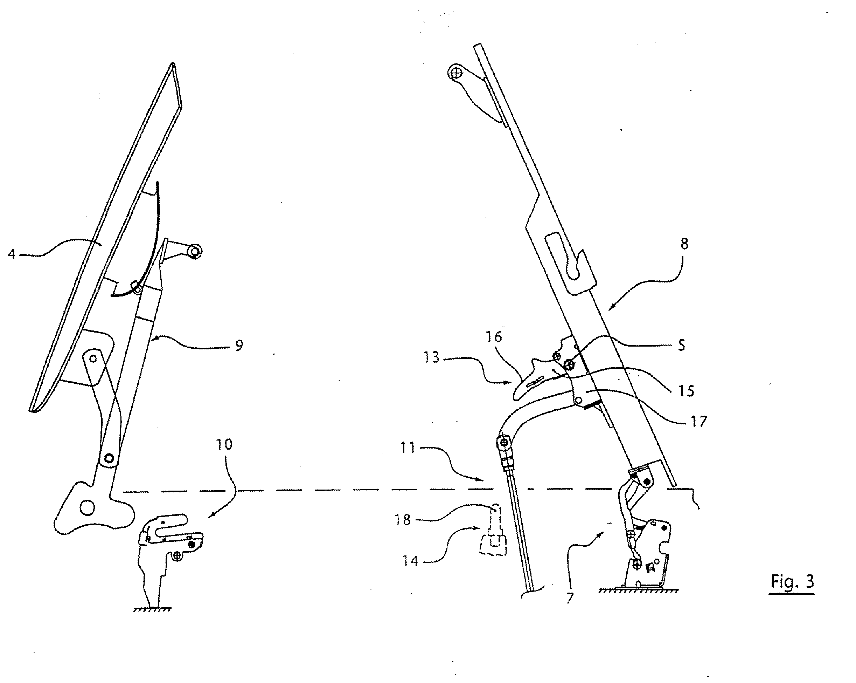

Bei dem erfindungsgemäßen Cabriolet-Fahrzeug ist der Niederhalter 12 von einem am Verdeckkastendeckel 8 gelagerten Gegenglied 13 und einem mit diesem am zurückgeklappten Verdeck 2 verbindbaren Auflageteil 14 gebildet. Die Prinzipdarstellungen gemäß Fig. 3 bis 5 verdeutlichen in Zusammenschau einen phasenweisen Ablauf, bei dem das Auflageteil 14 und das Gegenglied 13 durch einen zumindest zeitweise beim Schließen des Verdeckkastendeckels 8 gebildeten Verbindungseingriff gemeinsam in die Niederhaltestellung (Fig. 5) verlagerbar sind.

Die Übergangsphase von Fig. 4 zu 5 zeigt, daß bei sich schließendem Verdeckkastendeckel 8 das an diesem befindliche Gegenglied 13 zum verdeckseitig im wesentlichen vertikal vorstehenden Auflageteil 14 hin verlagert wird (Pfeile D und F), am Ende dieser Schwenk-Schub-Bewegung das Gegenglied 13 am Auflageteil 15 in den Verbindungseingriff (in Fig. 4 kurz vor der Anlage dargestellt) gelangt und danach eine Relativbewegung (Pfeil R) zwischen Auflageteil 14 und Gegenglied 13 erfolgt, so daß das Faltverdeck 2 danach durch den in Schließstellung befindlichen Verdeckkastendeckel 8 abgedeckt und durch den Niederhalter 12 fixiert ist (Fig. 5: Auflagedruck A im Punkt P).

Dieser Bewegungsablauf zeigt, daß die Kinematik des Antriebes am Verdeckkastendeckel 8 auf das mit diesem verlagerbare Gegenglied 13 so abgestimmt ist, daß dieses bei der Schließ- bzw. Öffnungsbewegung (entspricht dem umgekehrten Bewegungsablauf, ausgehend von Fig. 5 bis Fig. 2) zumindest phasenweise synchron mit dem Verdeckkastendeckel 8 bewegbar ist.

Das Gegenglied 13 ist insbesondere als eine an der Unterseite des Verdeckkastendeckels 8 um eine Stützachse S schwenkbar gelagerte Schwenkstütze 15 ausgebildet, deren freies Ende am mittels der Verdeckkinematik (nicht dargestellt) in den Verdeckkasten 6 verlagerten und hier im wesentlichen ortsfest in der Öffnungsstellung gehaltenen Auflageteil 14 anlegbar ist. Die am Auflageteil 14 anliegende Schwenkstütze 15 ist durch die im wesentlichen horizontale Schubkomponente beim Verlagern des Verdeckkastendeckels 8 entsprechend Pfeil F in die gemeinsame Niederhaltestellung mit dem Auflageteil 15 schwenkbar (Fig. 5), wobei der dabei erzeugte Auflagedruck A weitgehend variabel einstellbar ist.

Die Schwenkstütze 15 weist ein an das Auflageteil 14 heranführbares Formprofilteil 16 auf, dessen Auflagekontur einen zuverlässig erreichbaren Anlagebereich vorgibt und so mit geringem Aufwand Bewegungstoleranzen innerhalb der mehrgliedrigen Verdeckkinematik ausgleichbar sind. Denkbar ist auch, daß in diesem Bereich der aneinanderliegenden Teile des Niederhalters 12 eine formschlüssig verriegelnde Verbindung (nicht dargestellt) gebildet wird, mittels der die Schwenkstütze 15 beim Schließen des Verdeckkastendeckels 8 erfaßbar und bei der Öffnungsbewegung in die gemäß Fig. 2 dargestellte Vertikallage rückführbar ist.

In zweckmäßiger Ausführung ist die Schwenkstütze 15 mit einem nicht näher dargestellten Rückstellelement, beispielsweise einer sich beim Schließen des Verdeckkastendeckels 8 schließenden Feder, versehen, die aus der dargestellten Auflagephase (Fig. 5) die Schwenkstütze 15 relativ zum Verdeckkastendeckel 8 in die Ausgangslage (Fig. 3) zurückschwenkt.

Die Schwenkstütze 15 ist im Bereich eines Tragrahmens 17 am Verdeckkastendeckel 8 festgelegt, wobei in diesem Bereich auch zusätzliche Aufnahmeteile (nicht dargestellt) zur Halterung vorgesehen sein können. Denkbar ist dabei, daß mittels der verlagerbar aufgenommenen Schwenkstütze 15 die Niederhaltekraft (Pfeil A) verändert und damit die Niederhalte-Vorrichtung 12 fahrzeugspezifisch auf die Falteigenschaften des abgelegten Faltverdecks 2 eingestellt werden kann.

In der dargestellten Ausführung des zweiteiligen Niederhalters 12 weist dieser als Auflageteil 14 für die Schwenkstütze 15 einen insbesondere auch als Riegelteil nutzbaren Bolzen 18 auf, der als Teil des Verdeckverschlusses an einem vorderen Querrahmenteil 19 des Faltverdecks 2 abgestützt ist. Denkbar ist dabei auch, daß an Stelle des Riegel-Bolzens 18 ein zusätzliches nur zur Anlage vorgesehenes Bauteil am Querrahmenteil 19 angebracht ist.

In Umkehrung der vorbeschriebenen Verlagerbarkeit im Bereich der Schwenkstütze 15 ist auch denkbar, daß das Auflageteil 14 schwenkbar und/oder einstellbar ausgebildet ist und dabei eine entsprechende funktionale Einheit zur Sicherung des Verdecks 2 erreicht wird.

## Patentansprüche

1. Cabriolet-Fahrzeug mit versenkbarem Verdeck (2), insbesondere einem Faltverdeck, mit einem dieses in Öffnungsstellung aufnehmenden Verdeckkasten (6), der durch einen in der heckseitigen Karosseriekontur verlaufenden Verdeckkastendeckel (8) verschließbar ist, wobei zwischen diesem und dem im Verdeckkasten (6) ablegbaren Verdeck (2) ein auf dieses beim Schließen des Verdeckkastendeckels (8) auflegbarer Niederhalter (12) vorgesehen ist, **dadurch gekennzeichnet, daß** der Niederhalter (12) ein schwenkbar am Verdeckkastendeckel (8) abgestütztes Gegenglied (13) und ein mit dem Verdeck (2) bewegbares sowie mit dem Gegenglied (13) in einer zurückgeklappten Verdeckstellung verbindbares Auflageteil (14) aufweist.

2. Cabriolet-Fahrzeug nach Anspruch 1, **dadurch gekennzeichnet, daß** das Auflageteil (14) und das schwenkbare Gegenglied (13) durch einen zumindest phasenweise beim Schließen des Verdeckkastendeckels (8) gebildeten Verbindungseingriff (Punkt P) gemeinsam in die Niederhaltestellung überführbar sind.

3. Cabriolet-Fahrzeug nach Anspruch 1 oder 2, **dadurch gekennzeichnet, daß** bei sich schließendem Verdeckkastendeckel (8) das an diesem befindliche schwenkbare Gegenglied (13) zum verdeckseitigen Auflageteil (14) hin verlagerbar ist, am Ende dieser Bewegungsbahn (D, F) das Gegenglied (13) am Auflageteil (14) in den Verbindungseingriff gelangt, dabei eine Relativbewegung (Pfeil R) zwischen Auflageteil (14) und Gegenglied (13) erfolgt und danach das Verdeck (2) durch den Verdeckkastendeckel (8) fixiert ist.

4. Cabriolet-Fahrzeug nach einem der Ansprüche 1 bis 3, **dadurch gekennzeichnet, daß** das schwenkbar am Verdeckkastendeckel (8) abgestützte Gegenglied (13) bei der Schließ- bzw. Öffnungsbewegung des Verdeckkastendeckels (8) dessen Schwenk-Schub-Bewegung (D, F) aufnimmt.

5. Cabriolet-Fahrzeug nach einem der Ansprüche 1 bis 4, **dadurch gekennzeichnet, daß** das Gegenglied (13) als eine an der Unterseite des Verdeckkastendeckels (8) um eine Stützachse (S) schwenkbar gelagerte Schwenkstütze (1 5) ausgebildet ist, deren freies Ende am im wesentlichen ortsfest gehaltenen Auflageteil (14) anlegbar ist.

6. Cabriotet-Fahrzeug nach Anspruch 5, **dadurch gekennzeichnet, daß** die am Auflageteil (14) anliegende Schwenkstütze (15) durch eine im wesentlichen horizontale Schubbewegung (F) des Verdeckkastendeckels (8) in die gemeinsame Niederhaltestellung schwenkbar (Pfeil R) ist.

7. Cabriolet-Fahrzeug nach einem der Ansprüche 5 oder 6, **dadurch gekennzeichnet, daß** die Schwenkstütze (15) einen das Auflageteil (14) erfassenden Formprofilteil (16) aufweist.

8. Cabriolet-Fahrzeug nach einem der Ansprüche 5 bis 7, **dadurch gekennzeichnet, daß** die Schwenkstütze (15) eine diese relativ zum Verdeckkastendeckel (8) schwenkende Rückstellfeder aufweist.

9. Cabriolet-Fahrzeug nach einem der Ansprüche 5 bis 8, **dadurch gekennzeichnet, daß** die Schwenkstütze (15) durch einen Tragrahmen (17) am Verdeckkastendeckel (8) festgelegt ist.

10. Cabriolet-Fahrzeug nach einem der Ansprüche 5 bis 9, **dadurch gekennzeichnet, daß** dem Faltverdeck (2) mittels der verlagerbaren Schwenkstütze (15) eine einstellbare Niederhaltekraft (A) vermittelbar ist.

11. Cabriolet-Fahrzeug nach einem der Ansprüche 5 bis 10, **dadurch gekennzeichnet, daß** der Auflageteil (14) für die Schwenkstütze (15) von einem am vorderen Querrahmenteil (19) des Faltverdecks (2) abgestützten Riegelteil (Bolzen 18) des Verdeckverschlusses gebildet ist.

## Claims

1. A cabriolet vehicle with a foldaway soft top (2), in particular a folding soft top, with a soft-top compartment (6), which in the open position receives the soft top and which can be closed by a soft-top compartment lid (8) that follows in the line of the rear body contour, wherein there is provided between the lid and the soft top (2), which can be stored in the soft-top compartment (6), a hold-down device (12) that can be rested on the soft top when the soft-top compartment lid (8) is closed, **characterised in that** the hold-down device (12) has a counter-member (13) that is pivotably supported on the soft-top compartment lid (8), and a rest part (14) that can be moved with the soft top (2) and can be connected to the counter-member (13), when the soft top is in the folded-back position.

2. The cabriolet vehicle according to Claim 1, **characterised in that** the rest part (14) and the pivotable counter-member (13) can be jointly conveyed into the hold-down position by a connection engagement (point P) formed at least in some phases when the soft-top compartment lid (8) is closed.

3. The cabriolet vehicle according to Claim 1 or 2, **characterised in that**, in the case of a closing soft-top compartment lid (8), the pivotable counter-member (13) located on this can be displaced towards the rest part (14) at the soft top, at the end of this path of movement (D, F) the counter-member (13) comes into connection engagement at the rest part (14), there thereby occurs a relative movement (arrow R) between the rest part (14) and the counter-member (13) and thereafter the soft top (2) is locked into position by the soft-top compartment lid (8).

4. The cabriolet vehicle according to one of claims 1 to 3, **characterised in that** the counter-member (13) pivotably supported on the soft-top compartment lid (8) absorbs its pivot-push movement (D, F) during the closing or opening movement of the soft-top compartment lid (8).

5. The cabriolet vehicle according to one of claims 1 to 4, **characterised in that** the counter-member (13) is configured as a pivot support (15) which is borne on the underside of the soft-top compartment lid (8) pivotably around a support axle (S) and of which the free end can abut the rest part (14) which is kept substantially stationary.

6. The cabriolet vehicle according to Claim 5, **characterised in that** the pivot support (15) abutting the rest part (14) can be pivoted (arrow R) into the common hold-down position by a substantially horizontal push movement (F) of the soft-top compartment lid (8).

7. The cabriolet vehicle according to one of claims 5 or 6, **characterised in that** the pivot support (15) has a moulded profile part (16) which grips the rest part (14).

8. The cabriolet vehicle according to one of claims 5 to 7, **characterised in that** the pivot support (15) has a return spring which pivots it relative to the soft-top compartment lid (8).

9. The cabriolet vehicle according to one of claims 5 to 8, **characterised in that** the pivot support (15) is fixed by a carrying frame (17) on the soft-top compartment lid.

10. The cabriolet vehicle according to one of claims 5 to 9, **characterised in that** an adjustable hold-down force (A) can be imparted to the folding soft top (2) by means of the displaceable pivot support (15).

11. The cabriolet vehicle according to one of claims 5 to 10, **characterised in that** the rest part (14) for the pivot support (15) is formed by a soft-top closure's latch part (bolt 18) supported on the front transverse frame part (19) of the folding soft top (2).

## Revendications

1. Véhicule cabriolet avec une capote escamotable (2), en particulier une capote pliante, avec un logement de capote (6) recevant cette dernière lorsqu'elle est ouverte, lequel peut être fermé par un couvercle de logement de capote (8) passant dans le contour de la carrosserie arrière de la carrosserie, un dispositif de maintien (12) positionnable sur cette dernière lors de la fermeture du couvercle de logement de capote (8) étant prévu entre ce dernier et la capote (2) déposable dans le logement de capote (6), **caractérisé en ce que** le dispositif de maintien (12) présente un contre-membre (13) en appui de façon à pouvoir être orienté au niveau du couvercle de logement de capote (8) ainsi qu'une partie d'appui (14) mobile avec la capote (2) et pouvant être raccordée au contre-membre (13) lorsque la capote est en position refermée.

2. Véhicule cabriolet selon la revendication 1, **caractérisé en ce que** la partie d'appui (14) et le contre-membre (13) orientable sont transportables ensemble dans la position de maintien par l'intermédiaire d'un point de jonction (point P) formé au moins partiellement lors de la fermeture du couvercle de logement de capote (8).

3. Véhicule cabriolet selon la revendication 1 ou 2, **caractérisé en ce que**, lors de la fermeture du couvercle de logement de capote (8), le contre-membre (13) orientable se trouvant sur ce dernier est déplaçable vers la partie d'appui (14) du côté de la capote, à l'extrémité de cette trajectoire (D, F), le contre-membre (13) parvient au niveau de la partie d'appui (14) dans le point de jonction, de ce fait, il s'ensuit un mouvement relatif (flèche R) entre la partie d'appui (14) et le contre-membre (13), puis la capote (2) est fixée par le couvercle de logement de capote (8).

4. Véhicule cabriolet selon l'une des revendications 1 à 3, **caractérisé en ce que**, lors du mouvement de fermeture ou d'ouverture du couvercle de logement de capote (8), le contre-membre (13) en appui de façon orientable sur le couvercle de logement de capote (8) reçoit son mouvement de pivotement et de translation (D, F).

5. Véhicule cabriolet selon l'une des revendications 1 à 4, **caractérisé en ce que** le contre-membre (13) est développé sous la forme d'un support pivotant (15) placé sur le dessous du couvercle de logement de capote (8) et de façon à être orientable autour d'un axe de support (S), dont l'extrémité libre peut être placée sur la partie d'appui (14) maintenue substantiellement de manière fixe.

6. Véhicule cabriolet selon la revendication 5, **caractérisé en ce que** le support pivotant (15) attenant à la partie d'appui (14) est orientable grâce à un mouvement de translation (F) substantiellement horizontal du couvercle de logement de capote (8) dans la position commune de maintien (flèche R).

7. Véhicule cabriolet selon l'une des revendications 5 ou 6, **caractérisé en ce que** le support pivotant (15) présente une partie profilée façonnée (16) comprenant la partie d'appui (14)

8. Véhicule cabriolet selon l'une des revendications 5 à 7, **caractérisé en ce que** le support pivotant (15) présente un ressort de rappel pivotant ce dernier par rapport au couvercle de logement de capote (8).

9. Véhicule cabriolet selon l'une des revendications 5 à 8, **caractérisé en ce que** le support pivotant (15) est fixé par un cadre porteur (17) au niveau de le couvercle du logement de capote (8).

10. Véhicule cabriolet selon l'une des revendications 5 à 9, **caractérisé en ce qu'**une force de maintien (A) réglable peut être transmise à la capote pliante (2) au moyen du support pivotant (15) déplaçable.

11. Véhicule cabriolet selon l'une des revendications 5 à 10, **caractérisé en ce que** la partie d'appui (14) pour le support pivotant (15) est formée par une partie de verrouillage (boulon 18) de la fermeture de la capote en appui sur la partie de cadre transversale (19) avant de la capote pliante (2).
